# EUROPÄISCHE PATENTSCHRIFT

(11) **EP 1 290 511 B1**
(45) Veröffentlichungstag und Bekanntmachung des Hinweises auf die Patenterteilung: **13.08.2008**
(21) Anmeldenummer: 01931417.8
(22) Anmeldetag: 06.04.2001
(51) Int. Cl.: G05B 19/042

(54) **VERFAHREN UND VORRICHTUNG ZUR STEUERUNG UND/ODER ZUR BESTIMMUNG EINER VARIANTE EINER STEUERUNG EINES SYSTEMS**
METHOD AND DEVICE FOR THE CONTROL AND/OR THE DETERMINATION OF A VERSION OF A CONTROLLER IN A SYSTEM
PROCEDE ET DISPOSITIF POUR PILOTER ET/OU DETERMINER UNE VARIANTE DE COMMANDE D'UN SYSTEME

(30) Priorität: 17.04.2000 DE 10019208
(43) Veröffentlichungstag der Anmeldung: 12.03.2003
(73) Patentinhaber: ROBERT BOSCH GMBH, 70442 Stuttgart (DE)
(72) Erfinder: HELLMANN, Manfred, 71706 Hardthof (DE); BECK, Thilo, 70499 Stuttgart (DE); KRISO, Simone, 71739 Oberriexingen (DE); LAUXMANN, Ralph, 70825 Korntal-Muenchingen (DE); IRION, Albrecht, 70563 Stuttgart (DE)
(86) Internationale Anmeldenummer: PCT/DE2001/001341
(87) Internationale Veröffentlichungsnummer: WO 2001/079947

(56) Entgegenhaltungen:
- DE-C- 4 315 494
- US-A- 5 513 107

## Beschreibung

### Stand der Technik

Die Erfindung betrifft ein Verfahren und eine Vorrichtung zur Steuerung und/oder zur Bestimmung einer Variante einer Steuerung eines Systems, wobei eine Komponente entsprechend den Varianten der Steuerung in verschiedenen Varianten betrieben und/oder ausgeführt werden kann, gemäß den Oberbegriffen der unabhängigen Ansprüche.

Dazu ist in der DE 37 38 915 A1 ein universell einsetzbares Steuergerät für Regeleinrichtungen offenbart. Dabei wird ein Universalsteuergerät eingesetzt, welches erst nach der Montage aufgrund eines äußeren Befehls feststellt, welche Systemauslegung vorliegt, um diese dann abzuspeichern. Ein solches Universalsteuergerät wird dann je nach Einwendung für die aufwendigste Regeleinrichtung ausgelegt und schöpft bei Einsatz einer einfacheren Regelungsausgestaltung seine Fähigkeiten nicht voll aus. Diese flexible Lösung birgt jedoch auch sicherheitstechnische Risiken. Aus Gründen der Systemsicherheit ist es oft notwendig sicherzustellen, daß nur autorisierte Stellen die Fahrzeugvariante eintragen bzw. manipulieren.

Um dieses Sicherheitsrisiko zu entschärfen, werden beispielsweise externe Programmiergeräte oder Diagnosegeräte zur Programmierung der Daten und/oder Programme eingesetzt, welche nicht jedermann zur Verfügung stehen. Dazu zeigt die DE 42 11650 A1 ein Verfahren zur Variantencodierung bei mehreren miteinander vernetzten Steuergeräten, insbesondere in Kraftfahrzeugen. Dabei werden die Variantenkennungen für die Auswahl verschiedener Varianten von Programm- und/oder Betriebsdaten der einzelnen Steuergeräte von dem externen Programmiergerät bzw. Diagnosegerät an ein bestimmtes Steuergerät des Steuergeräteverbundes übertragen. Von diesem bestimmten Steuergerät des Steuergeräteverbundes werden dann die Variantenkennungen zu den anderen Steuergeräten übertragen, wozu ein Bussystem, welches die Steuergeräte verbindet, benutzt wird. Jede der übertragenen Variantenkennungen wird dann mindestens für die Dauer des Betriebes der Steuergeräte in einem Speicher des ihm zugeordneten Steuergerätes gespeichert. Dabei würde für jede Variante ein eigenes Steuergeräteprogramm vorgesehen. Diese Möglichkeit erweist sich als sehr aufwendig, beispielsweise in Bezug auf Entwicklung und Überprüfung, Wartung, Reparatur, usw. und ist daher sehr kostenintensiv. Ein weiteres Programmierverfahren unter Nutzung eines Programmiergeräts ist aus der DE 42 11 650 A1 bekannt.

Bei vielen Anwendungen wäre es wünschenswert, die Steuerung eines Systems bzw. die Programme und/oder Daten so flexibel zu gestalten, dass es für eine große Bandbreite unterschiedlicher Systemvarianten einfach angepasst werden kann, da unterschiedliche Systemvarianten unterschiedliche Daten benötigen. Gleichzeitig sollen das Sicherheitsrisiko und die Manipulationsmöglichkeiten gering gehalten werden.

### Vorteile der Erfindung

Die Erfindung geht aus von einem Verfahren und einer Vorrichtung zur Steuerung eines Systems und/oder zur

Bestimmung einer Variante einer Steuerung eines Systems, insbesondere bei einem Kraftfahrzeug, wobei die Steuerung in verschiedenen Varianten durchgeführt werden kann, wobei eine Komponente entsprechend den Varianten der Steuerung in verschiedenen Varianten betrieben werden kann, und die Komponente über eine Schnittstelle wenigstens ein Signal empfängt.

Erfindungsgemäß wird dabei bei einer ersten Inbetriebnahme der Komponente die Variante abhängig von dem wenigstens einen Signal angepaßt und/oder vorgegeben und eine weitere, der ersten Inbetriebnahme nachfolgende Änderung und/oder Vorgabe der Variante nur autorisiert durchgeführt. Die Komponente entspricht dabei einer Steuereinheit und/oder intelligenter Sensorik und/oder intelligenter Aktuatorik.

Das Sicherheits- bzw. Manipulationsrisiko wie im Stand der Technik wird insofern vermieden, dass vorteilhafterweise bei der ersten Inbetriebnahme der Komponente diese selbständig, entsprechend des wenigstens einen Signals, das diese empfängt, die Variante einmalig bestimmt. Wird die Komponente in eine bestehende Systemumgebung eingebaut, also mit wenigstens einer weiteren Komponente verbunden, so empfängt die Komponente das wenigstens eine Signal von der weiteren Komponente über die Verbindungsschnittstelle, wodurch eine Verwechslung von Programmier- bzw. Codierdaten, wie beispielsweise bei externem Zugriff, vermieden wird, da die Variantenbestimmung bzw. die entsprechende Steuerung systemimmanent durchgeführt wird.

Zweckmäßigerweise wird dabei wenigstens eine die Variante und/oder das Signal repräsentierende Größe in einen Speicher der Komponente eingeschrieben, anhand derer die Variante bestimmt wird, vorteilhafterweise durch die Komponente selbst.

Vorteilhafterweise wird die Autorisierung durch Überprüfung einer Kennung bzw. dem Vorhandensein oder Nichtvorhandensein einer Kennung im Speicher der Komponente durchgeführt. Durch ein einfaches Überprüfen des Vorhandenseins oder Nichtvorhandenseins der Kennung bzw. der Daten wird vorteilhafterweise quasi die Speicherung der Kennung bzw. der Daten selbst als Eintritt in den Autorisierungsschritt eingesetzt.

Weiterhin von Vorteil ist, daß die Komponente, insbesondere die elektronische Steuereinheit, die relevante Variante der Steuerung selbständig erkennt und somit eine Verwechslung von Daten ausgeschlossen wird, da die Variantenbestimmung zweckmäßig systemimmanent durchgeführt werden kann.

Dadurch kann vorteilhafterweise die Kompatibilität einer Vielzahl von Partnerkomponenten, insbesondere Partnersteuergeräten, sowie weiteren Komponenten sichergestellt werden.

Beispielsweise aus Manipulationsschutzgründen ist vorteilhafterweise weiterhin sichergestellt, daß eine einmal im System eingebaute Komponente nicht ohne weiteres in eine andere Systemumgebung eingebaut werden kann. Die Überwachung der einmalig eingespeicherten Daten garantiert dabei, daß die Systemumgebung mit den gelernten Daten übereinstimmt.

Die gezielte Änderung und/oder Vorgabe der eingespeicherten Daten und somit der Variante ausschließlich durch Autorisierung, beispielsweise durch autorisierte Tool, ermöglicht trotzdem einen Transfer der Komponente in eine andere Systemumgebung, welcher allerdings von autorisierten Stellen vorgenommen werden muß.

Weitere Vorteile und vorteilhafte Ausgestaltungen der Erfindung sind Gegenstand der Ansprüche und der Beschreibung.

### Zeichnung

Die Erfindung wird im weiteren anhand der in der Zeichnung dargestellten Figuren beschrieben.

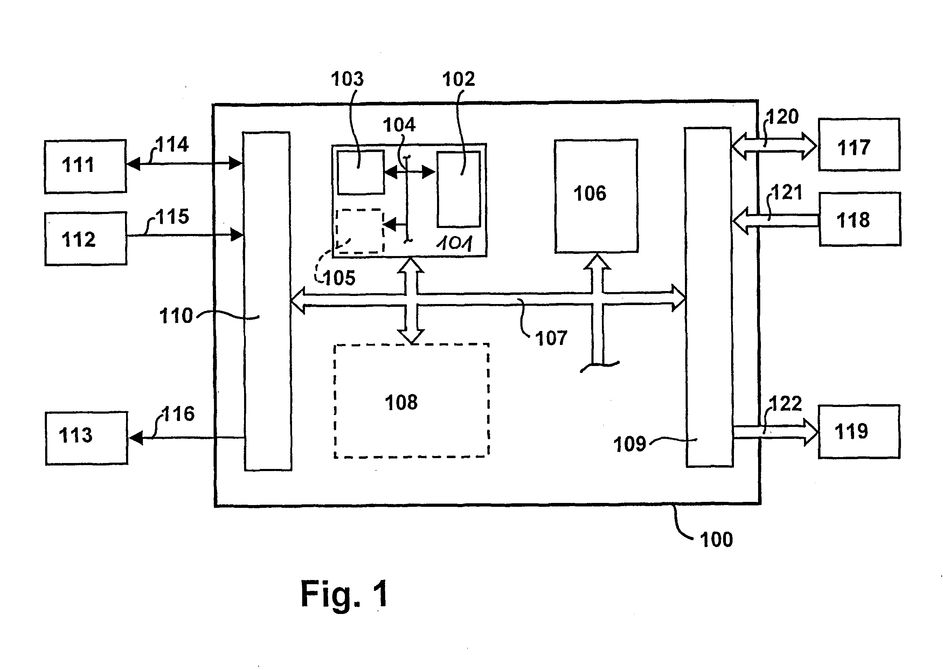

Dabei zeigt Figur 1 eine Möglichkeit für eine erfindungsgemäße Komponente in Form einer Steuereinheit sowie mögliche Peripherie zur Durchführung einer Steuerung von Betriebsabläufen, insbesondere bei einem Fahrzeug.

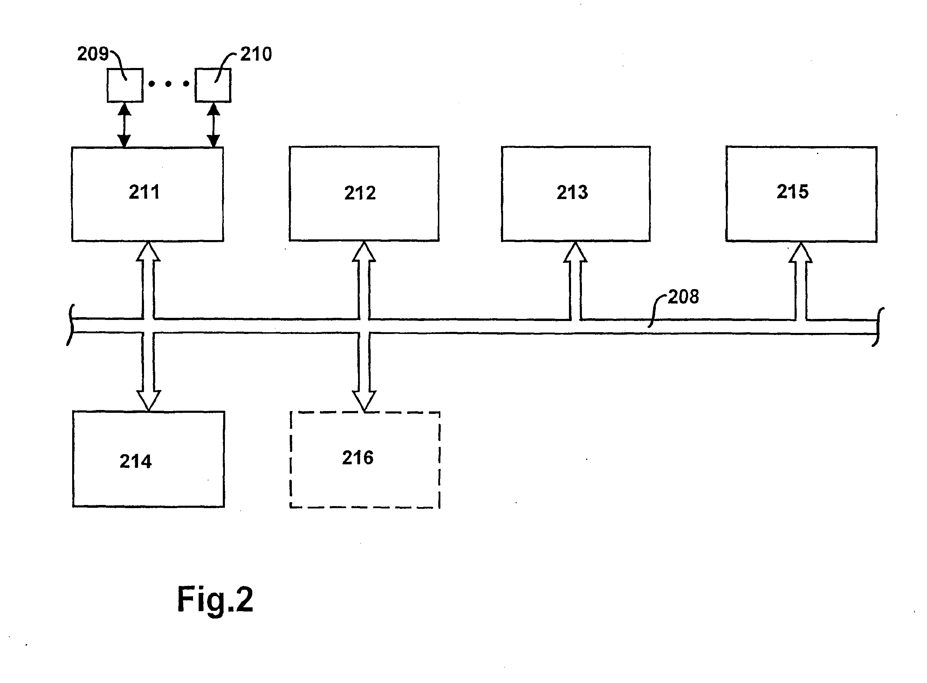

Die Einbindung einer solchen Steuereinheit aus Figur 1 in eine Systemumgebung ist in Figur 2 dargestellt.

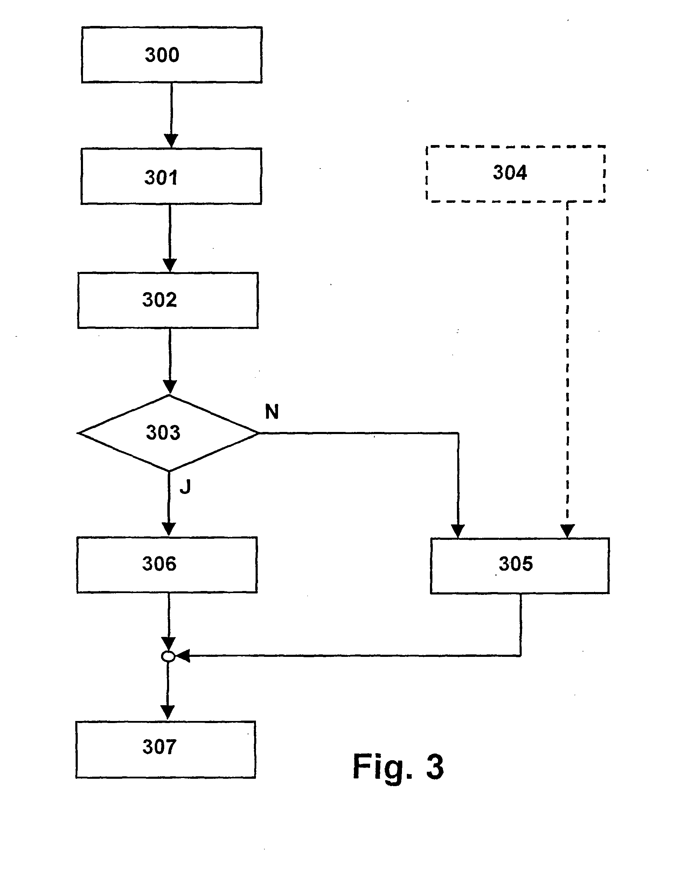

Figur 3 zeigt anhand eines Flußdiagramms verschiedene Möglichkeiten des erfindungsgemäßen Verfahrens zur Variantenbestimmung bzw. -ermittlung der Komponente und/oder der Systemumgebung.

### Beschreibung der Ausführungsbeispiele

Im weiteren wird als spezielle Ausführungsform die Steuerung bzw. die Bestimmung der Variante der Steuerung eines Systems bei einem Kraftfahrzeug beschrieben, insbesondere eines Systems im Rahmen einer adaptiven Fahrgeschwindigkeits- und/oder Abstandsregelung.

Die dabei dargestellten Überlegungen sind aber gleichermaßen bei anderen Systemen beispielsweise Maschinen, insbesondere Werkzeugmaschinen anwendbar. Die dargestellte Systematik bei der Variantenbestimmung der Komponente, insbesondere bei Einbau in einen Systemverbund mit mehreren verbundenen Komponenten wie dies beispielsweise auch für Werkzeugmaschinen, insbesondere Bearbeitungszentren, gegeben ist, ist allgemein bei Systemen anwendbar, eben auch übertragbar beispielsweise auf Produktionsgüter.

Im weiteren wird das Verfahren bzw. die Vorrichtung anhand einer Kraftfahrzeugkomponente und einer Kraftfahrzeugsystemumgebung, also in Summe anhand eines Kraftfahrzeugsystems erläutert.

Dazu zeigt Figur 1 ein allgemeines Beispiel für eine Komponente 100, beispielsweise eine Steuereinheit in einem Fahrzeug. Daneben ist mit 111 bis 113 und 117 bis 119 dessen mögliche Peripherie schematisch mit den zugehörigen optionalen Schnittstellen 114 bis 116 und 120 bis 122 dargestellt. Eine solche Steuereinheit 100 dient beispielsweise zur Steuerung einer Antriebseinheit, eines Getriebes, eines Bremssystems oder einer adaptiven Fahrgeschwindigkeits- und/oder Abstandsregelung (Adaptive Cruise Control), u.s.w.

Die Steuereinheit 100 in diesem Beispiel beinhaltet eine serielle Ein-/Ausgangsbaugruppe 110 und/oder eine parallele Ein-/Ausgangsbaugruppe 109. An die serielle Ein-/Ausgangsbaugruppe 110 sind seriell und bidirektional dargestellt durch Verbindung 114, Peripherieelemente, dargestellt durch Peripherieelement 111, angeschlossen. Das Peripherieelement 111 symbolisiert dabei Peripherieelemente wie intelligente Sensorik oder Aktuatorik sowie integrierte Peripherieelemente mit Sensorik und Aktuatorik oder auch weitere über serielle Schnittstellen anschließbare Steuereinheiten. Weitere Peripherieelemente, dargestellt durch Element 112, insbesondere Sensorik, ist unidirektional über Verbindung 115 mit dem Steuergerät 100 gekoppelt und liefert beispielsweise Meßwerte oder Meßergebnisse, insbesondere bereits vorverarbeitet bzw. aufbereitet an die Steuereinheit 100. Ebenso werden Peripherieelemente, insbesondere Stellglieder, dargestellt durch Element 113 durch die Steuereinheit 100 über Ein-/Ausgangsbaugruppe 110 seriell angesteuert. Verbindung 116 symbolisiert dabei den unidirektionalen Signalübergang zur Aktuatorik 113.

Gleichzeitig oder ersatzweise zur seriellen Anschlußseite kann die Steuereinheit 100 in diesem Beispiel wenigstens eine parallel Anschlußseite, symbolisiert durch Ein/Ausgangsbaugruppe 109 besitzen. Daran sind Peripherieelemente, dargestellt durch Element 117 parallel und bidirektional, symbolisiert durch Verbindung 120 angeschlossen. Dies kann einerseits ein Bussystem im Fahrzeug sein womit parallel anschließbare Sensorik und Aktuatorik sowie weitere Steuereinheiten des Fahrzeugs, dargestellt durch Peripherieelement 117 anschließbar sind. Ebenso können weitere Peripherieelemente unidirektional und parallel, dargestellt durch Element 118 und Verbindung 121 an die Steuereinheit 100 angeschlossen sein, von welchen die Signale lediglich dem Steuergerät übermittelt werden. Gleichfalls ist Peripherie, insbesondere Aktuatorik, dargestellt durch Element 119 und Verbindung bzw. Schnittstelle 122 denkbar, welche lediglich parallel und unidirektional durch die Steuereinheit 100 bedient wird.

Die dargestellte Peripherie ebenso wie die Anschlußbaugruppe ist prinzipiell optional und je nach Steuereinheitausprägung bzw. unterschiedliche Steuereinheiten im Fahrzeug je nach Anwendung enthalten oder ausgespart.

Gleiches gilt für die weiteren Elemente, welche in der Steuereinheit 100 selbst dargestellt sind. Deren Vorhandensein oder Fehlen bzw. deren Zusammensetzung variiert je nach Steuereinheit bzw. Steuerungsaufgabe im Fahrzeug. Mit Element 101 ist dabei wenigstens ein Mikrocomputer enthalten, der seinerseits eine Prozessoreinheit 103 und einen internen Speicher 102, insbesondere einen Flashspeicher oder eine interne Registerbank enthält. Im weiteren wird der interne Speicher als nichtflüchtiger Speicher, insbesondere als Flashspeicher, ausgeführt. Der On-Chip-Speicher 102 kann aber ebenso beispielsweise als EEPROM, EPROM, etc ausgebildet sein. Die Prozessoreinheit 103 und der Speicher 102 sind mit weiteren optionalen Bauelementen 105, wie einer Schnittstelleneinheit, eigener interner Energieversorgung, weiteren Speichern, Prozessoreinheiten bzw. Coprozessoren, u.s.w. im Mikrocomputer 101 durch ein internes Leitungs- bzw. Bussystem 104 miteinander verbunden.

Der Mikrocomputer 101 ist dabei über wenigstens ein steuereinheitinternes Leitungs-/Bussystem 107 mit weiteren Komponenten eben beispielsweise den Ein-/Ausgangsbaugruppen 109 und 110 verbunden. Mit 106 ist im allgemeinen ein weiteres Speichermittel, insbesondere ein nichtflüchtiger Speicher wie z. B. ein EEPROM oder ein Flash-EPROM, EPROM, PROM oder ROM in der Steuereinheit 100 enthalten und mit dem Bussystem 107 verbunden. Im weiteren wird dabei von einem EEPROM ausgegangen, wobei aber auch andere nichtflüchtige und insbesondere löschbare Speicher, insbesondere ein Flash-EPROM denkbar sind. Die Aufteilung der Programme und/oder Daten zwischen Speicher 102 und Speicher 106 ist dabei beliebig vorgebbar, im Extremfall könnten die Programme und/oder Daten auch vollständig auf dem einen oder dem anderen Speicher implementiert sein.

Weitere optionale und der Übersichtlichkeit halber nicht im einzelnen dargestellte Baugruppen sind durch Element 108 symbolisiert. Dabei handelt es sich beispielsweise um weitere Mikrocomputer, weitere Prozessoreinheiten, weitere Speichermittel, interne Sensorik, beispielsweise zur Temperaturüberwachung oder in die Steuereinheit integrierte Sensorik beispielsweise ein Radarsensor bei einer adaptiven Fahrgeschwindigkeits- und/oder Abstandsregelung, wenigstens eine Energieversorgung, u.s.w.

Eine Anordnung wie in Figur 1 bzw. vergleichbare Anordnungen werden zur Steuerung von Betriebsabläufen in einem Fahrzeug eingesetzt. Diese dienen insbesondere zur Steuerung einer Antriebseinheit, des gesamten Antriebsstranges, insbesondere zur Getriebesteuerung, zur Steuerung einer Bremsanlage oder zur Steuerung von Anzeige- , Komfort -, sowie Sicherheitssystemen, u.s.w.

Eine solche Steuereinheit kann beispielsweise im Rahmen einer adaptiven Fahrgeschwindigkeits- und/oder Abstandsregelung eines Kraftfahrzeugs eingesetzt werden. Eine solche Regelung kann ohne Eingriff durch den Fahrer eine zuvor eingestellte Fahrgeschwindigkeit und/oder einen zuvor eingestellten Abstand zu einem vorausfahrendem Fahrzeug oder zu sich in Fahrtrichtung befindlichen Gegenständen und/oder Objekten regeln und/oder überwachen. Dies geschieht unter entsprechender Berücksichtigung des Umfelds des Kraftfahrzeuges und gegebenenfalls weiterer Parameter wie beispielsweise den Witterungs- und Sichtbedingungen, welche gegebenenfalls durch die Sensorik erfaßt werden. Eine solche Regelung bzw. ein Adaptive-Cruise-Control-System (ACC-System) muß insbesondere mit Blick auf die steigende Verkehrsdichte der heutigen Zeit flexibel genug sein, um auf alle Fahrsituationen geeignet zu reagieren. Dies erfordert wiederum eine entsprechende Objektdetekionssensorik, um in jeder Fahrsituation die für die Regelung notwendigen Meßdaten zu liefern. Diese Sensorik kann außerhalb der Steuereinheit aber ebenso innerhalb der Steuereinheit bzw. des Gehäuses der Steuereinheit untergebracht sein, wodurch ein kompaktes Komplettsystem entsteht.

Ein solches System, wie in Figur 2 beschrieben, unterscheidet sich je nach Fahrzeugtyp bzw. Steuerungsfunktionalität, also der Varianten der Steuerung des Systems sowie der einzelnen Steuereinheiten. Soll nun eine Komponente, insbesondere eine Steuereinheit, hier die ACC-Steuereinheit 214 in eine Systemumgebung, hier bestehend aus den Komponenten 211 bis 213 und 215 bis 216, verbunden über das Bussystem 208, eingebracht werden, ist es vorteilhaft, die Steuerfunktionen der Steuereinheit 214 bzw. das Rechenprogramm dieses elektronischen Steuergeräts so flexibel zu gestalten, daß es für eine große Bandbreite an Fahrzeugen einfach angepaßt werden kann, da unterschiedliche Fahrzeugvarianten auch wenigstens in Teilen unterschiedliche Daten benötigen. Die übrigen Systemkomponenten sind dabei beispielsweise eine Motorsteuerung 211, z.B. mit einem Drehzahl- oder Momentenerfassungsmitel 209 und einem Drosselklappensteller 210, u.s.w. eine Anzeigeeinheit 212, insbesondere ein Kombiinstrument, eine Steuerung für den Bremseingriff bzw. Fahrstabilität 213, eine Getriebesteuerung 215, sowie optional weitere Komponenten 216, in Form weiterer Steuereinheiten, Sensorik oder Aktuatorik.

Die Komponenten des Systems bzw. der Systemumgebung tauschen über das Bussystem 208 Signale bzw. Daten aus. Diese Daten der Systemumgebung also der Komponenten 211 bis 213, 215 und 216 werden im weiteren als Umgebungsdaten oder Umgebungssignale bezeichnet. Erfindungsgemäß erkennt bzw. bestimmt die Komponente 214, hier also das ACC-Steuergerät, selbständig die Variante aus den Umgebungsdaten und trägt dies einmalig in den entsprechenden Speicherbereich, beispielsweise des nichtflüchtigen Speichers 106 ein. Diese Umgebungsdaten sind Informationen, die das elektronische Steuergerät 214 durch die Kommunikation mit der Systemumgebung, also den anderen Komponenten, sprich Steuereinheiten, Sensoren, Aktuatoren, etc. erhält.

Diese einmalig lernbaren Daten OTL (One-Time-Learnable) können im später in Figur 3 beschriebenen Verfahren auf zweierlei Arten eingesetzt werden. Zum ersten wird aus den Umgebungsdaten die jeweilige Variante für die Steuereinheit bestimmt und diese Variante, bzw. eine diese repräsentierende Größe als OTL-Datum in den EEPROM-Speicherbereich des nichtflüchtigen Speichers 106 eingetragen. Zweckmäßigerweise kann dieses OTL-Datum zur Variantenkennzeichnung, aber auch in den Mikrocomputer internen Speicher 102 eingetragen werden. Dabei sind beispielsweise die unterschiedlichen Variantendaten (beispielsweise Normierungsswerte der übertragenen CAN-Daten u.s.w.) in einem nichtflüchtigen, beispielsweise auch nicht löschbaren bzw. gegen Löschung gesicherten Speicherbereich beispielsweise in Speicher 106 abgelegt. Die Umschaltung also der Variantenwechsel bzw. die Variantenvorgabe im Reglerprogramm kann dann im laufenden Betrieb, wie in Figur 3 dargestellt, erfolgen.

Als weitere Möglichkeit können die Variantendaten selbst, also die variantenspezifischen Umgebungsdaten direkt als OTL-Daten aus den Umgebungsdaten bestimmt (beispielsweise auf CAN gesendete Normierungswerte) und in den EEPROM-Speicherbereich eingetragen werden. Das Schreiben auf den Speicherbereich des nichtflüchtigen Speichers beispielsweise in Speicher 102 oder 106 erfolgt in beiden Fällen genau einmal, wenn zuvor noch keine OTL-Daten vorhanden sind und zwar zweckmäßigerweise bei der ersten Inbetriebnahme.

Das in Figur 2 dargestellte Beispiel beschreibt ein System zur Regelung der Geschwindigkeit eines Fahrzeugs, insbesondere unter Einbeziehung von vorausfahrenden Fahrzeugen, also eine Regelung der Fahrgeschwindigkeit und/oder des Fahrabstandes. Dabei ist mit einem der Peripherieelemente aus Figur 1, beispielsweise Peripherieelement 111, ein Radarsensor zur Erfassung der vorausfahrenden Fahrzeuge an einem Fahrzeug angebracht. Dieser Radarsensor beispielsweise wie schon erwähnt als Baustein eines Fahrzeugkomfortsystems ACC (Adaptive Cruise Control) ist gleichermaßen getrennt von, wie als kompakte Einheit mit der Steuereinheit 100 kombinierbar. Ein solches Kompaktsystem ist in Figur 2 durch Steuereinheit 214 dargestellt.

Bei dem Radarsensor werden ständig Informationen über den Abstand und die Relativgeschwindigkeit des Fahrzeuges zu anderen Fahrzeugen und zu den Straßengegebenheiten verarbeitet. Die funktionelle Aufteilung dieser Verarbeitung, ob im Sensor selbst oder in der zugehörigen Steuereinheit, ist dabei beliebig. Die Grundfunktionen des beschriebenen Systems betreffen die Regelung der Fahrgeschwindigkeit entweder auf eine Sollgröße, hier die Wunschgeschwindigkeit, oder auf die Geschwindigkeit eines vorausfahrenden Fahrzeugs, falls dieses langsamer als die Wunschgeschwindigkeit fährt und sich dieses im Detektionsbereich des Radarsensors befindet. Dieser Sensor kann beispielsweise Bestandteil eines Mikrowellenradars (z.B. FMCW, also Frequency Modulated Continuous Wave oder Impulsradar) oder eines Infrarot-LIDARS (LIght Detection And Range, z.B. auch eines Doppler-LIDARS) sein und mißt dazu den Abstand der Relativgeschwindigkeit und den Winkel von Objekten, insbesondere von vorausfahrenden Fahrzeugen innerhalb des Detektionsbereichs. Dabei werden neben der Messung auch prädiktive Aussagen, beispielsweise über zukünftige Kursverläufe des Fahrzeuges oder den zukünftigen Kursbereich, u.s.w. möglich.

Dabei wird mittels Auswertung in der Steuereinheit 214 beispielsweise ein Eingriff, insbesondere in Form einer Anforderung, in die Motorsteuerung 211 oder Bremsen- sowie. Getriebesteuerung 213 und 215 durchgeführt.

Ebenso tauschen beispielsweise Getriebesteuerung 215 und Motorsteuerung 211, beispielsweise über die Momentenschnittstelle relevante Daten eben beispielsweise Momente aus.

So werden beispielsweise ACC-Sollwerte an die Motorsteuerung 211 in Prozent übertragen, wobei die Motorsteuerung den Maximalwert selber vorgibt. Unterschiedliche Motorsteuerungen (z. B. Diesel, Ottomotor und Varianten diesbezüglich wie Benzindirekteinspritzung beim Ottomotor oder Common-Rail sowie Pumpe-Düse beim Dieselmotor ermöglichen bzw. erfordern unterschiedliche Maximalwerte.

Gleichermaßen sendet beispielsweise das Getriebesteuergerät 215 über den CAN-Bus 208 ein Signal, welches anzeigt, ob es sich in diesem Fahrzeug um ein Automatikgetriebe oder beispielsweise um ein in seiner Übersetzung kontinuierlich verstellbares sogenanntes CVT-Getriebe (Continuously Variable Transmission) oder auch um ein automatisiertes Schaltgetriebe handelt.

Weiterhin sendet beispielsweise das Kombiinstrument 212 ein Signal, daß anzeigt, ob es sich um eine Anzeige mit Meileneinheiten oder mit Kilometereinheiten handelt und so auch die Geschwindigkeit in Meilen pro Stunde oder Kilometer pro Stunde angegeben wird. Es gibt beispielsweise Ausführungen von Kombiinstrumenten, die solche Informationen in Form einer Remotebotschaft auf den CAN-Bus zur Verfügung stellen, d. h. auf Anfrage durch ein anderes Steuergerät beispielsweise eben die ACC-Steuereinheit 214 wird eine entsprechende Botschaft vom Kombiinstrument 212 versendet.

Die beiden Möglichkeiten zum Einsatz dieser und anderer Umgebungsdaten entsprechend der Erfindung wird nun in Figur 3 anhand eines Flußdiagramms erläutert. In Block 300 erfolgt eine erste Inbetriebnahme, beispielsweise durch einen externen Befehl, Power-On, also Zuschaltung der Energieversorgung oder Betätigung des Startschalters,z.B. Zündschalters, insbesondere nach Fahrzeugeinbau.

In Block 301 werden dann die Signale bzw. Umgebungsdaten der Systemumgebung durch die ACC-Steuereinheit 214 eingelesen. In Block 302 werden nun entweder die fahrzeugindividuellen Daten bzw. steuervariantenindividuellen Daten also die variantenspezifischen Umgebungsdaten bestimmt oder es wird aus den Umgebungsdaten die jeweilige Variante bestimmt. Eine Möglichkeit hierbei wäre alle für das ganze System relevanten beschriebenen Daten durch die einzelnen Komponenten mit einer eigenen Kennung zu versehen. Dies hätte den Vorteil, daß die Steuereinheit 214 nur die Kennung vergleichen muß und die entsprechenden Daten an dafür vorgesehenen Adressen speichert, wodurch vorab keine Daten zum Vergleich in der Steuereinheit 214 enthalten sein müssen, lediglich die Kennung bzw. Kennungen. Es kann somit ein bezüglich der variantenabhängigen Daten ungelerntes ACC-Steuergerät ins System eingebracht werden, welches quasi dann erst bei der einmaligen Erstabspeicherung dieser Umgebungsdaten seine konkrete Bestimmung sprich Steuervariante erfährt.

Je nach dem, ob die Variante aus den Umgebungsdaten bestimmt wurde, oder die variantenbestimmenden Umgebungsdaten selbst bestimmt wurden, wird in Abfrage 303 entweder überprüft, ob die Variante als OTL-Datum im Speicher eingetragen ist bzw. ob die variantenbestimmenden Umgebungsdaten, ebenso als OTL-Daten, eingetragen sind. Dies kann auf unterschiedliche Art und Weise geschehen.

Im einfachsten Fall wird der EEPROM-Inhalt im ungelernten Zustand bei hexadezimaler Schreibweise beispielsweise mit FF initialisiert. Das Programm der Steuereinheit erkennt an diesem Inhalt, daß gelernt werden muß, also der Lernalgorithmus durchgeführt werden muß. Eine nachträgliche Autorisierung des Lernvorgangs kann bei dieser Lösung dadurch erfolgen, daß z.B. ein Diagnose-Service den Inhalt wieder, eben mit vorheriger Autorisierung mit FF auffüllt.

Eine weitere Möglichkeit besteht darin, eine Kennung beispielsweise ein einzelnes Bit im EEPROM als Kennung für erfolgtes bzw. nicht erfolgtes Lernen zu verwenden und dieses abzufragen.

Eine dritte Möglichkeit triggert das Lernen von außen, z. B. das Einlesen von Bandende- (End-Of-Line) Botschaften triggert den Lernvorgang.

Die vierte Möglichkeit schließlich ist, daß ein Diagnoseservice, welcher das Steuergerät in den Lernmodus versetzt.

Ist der Lernmodus vorgesehen, sind also noch keine OTL-Daten im Speicher eingetragen, werden in Block 305 entweder die Variante als OTL-Datum und/oder die variantenbestimmenden Umgebungsdaten als OTL-Daten im EEPROM eingetragen. Dies geschieht wie schon genannt, genau einmal, wenn zuvor noch keine OTL-Daten vorhanden sind. Dieses One-Time-Learning im System, also der Steuereinheit 214 aus der Systemumgebung 211 bis 213 und 215, 216 über Bus 208 bei der Erstinbetriebnahme wenigstens der Komponente, also der Steuereinheit 214, sorgt dafür, daß die Systemumgebung mit der Steuereinheit kompatibel ist bzw. die Umgebung mit den gelernten Daten übereinstimmt. Wird in Abfrage 303 festgestellt, daß bereits One-Time-Learning-Daten wie vorher ausgeführt, eingetragen sind, gelangt man zu Block 306. Darin kann dann eine Überwachung der Variante bzw. der fahrzeugindividuellen bzw. variantenbestimmenden Daten durch Vergleich der weiterhin auf den Bus 208 gesendeten Daten mit den abgespeicherten OTL-Daten durchgeführt werden. Im Block 307 erfolgt ausgehend von Block 306 oder Block 305 der weitere Programmablauf.

Nach der Erstinbetriebnahme kann eine Änderung der OTL-Daten im EEPROM nurmehr über Block 304 ebenso wie das Löschen über Autorisierung, beispielsweise ein autorisiertes Tool, wie ein Diagnosetester durch autorisierte Stellen, beispielsweise den Kundendienst vorgenommen werden. Über einen Code bzw. Schlüssel sowie dessen Überprüfung in der Komponente kann dabei im Rahmen einer Autorisierung die Sperrung des Lernmodus nach dem einmaligen Programmieren der OTL-Daten aufgehoben werden. Gleichermassen ist eine solche Autorisierung durch Codierte Stecker bzw. Bauteile vornehmbar. Mit den Schritten der selbstprogrammierten OTL-Daten und der nachfolgenden Autorisierung bei Änderungen kann beispielsweise auch die Variantencodierung am Bandende als potentielle Fehlerquelle im Fertigungsablauf entscheidend abgesichert werden.

In einer vorteilhaften Anwendung des Verfahrens bzw. der Vorrichtung können bisher mit speziellen Diagnosetools eintragbare Daten über die vorhandenen Kommunikationswege des Steuergerätes z. B. den CAN-Bus mit deutlich verringerten Aufwand z. B. mit End-Of-Line-CAN-Botschaften programmiert werden. Neben End-Of-Line Botschaften können selbstverständlich auch andere Botschaften, insbesondere weitere bzw. andere CAN-Botschaften des Fahrzeug-CAN-Busses, dazu herangezogen werden.

Eine weitere vorteilhafte Anwendung ist beispielsweise, wenn eine Selbstdiagnose, z. B. die Kalibrierung eines Sensors bzw. das Ablegen eines Offsetwertes nur einmalig erfolgen muß beispielsweise durch Fahren einer definierten Strecke, insbesondere am Bandende.

Ebenso kann bei der Steuergeräteherstellung das Steuergerät auf Lernen gestellt werden, so daß das Steuergerät im Verbund automatisch die Daten ohne Autorisierung lernt. So kann beispielsweise ein Steuergerätehersteller dem Fahrzeughersteller ein sehr flexibel und nachträglich einbaubares Steuergerät bzw. Komponente zur Verfügung stellen.

Wie schon erwähnt, ist lediglich das Ausführungsbeispiel auf eine Fahrzeuganwendung beschränkt. Selbstverständlich sind gleiche Einsatzmöglichkeiten bei allen anderen Systemen vergleichbarer Struktur wie beispielsweise bei Werkzeugmaschinen, insbesondere Bearbeitungszentren bei nachträglichem Einbau einer Komponente beispielsweise einer Steuereinheit für ein Bearbeitungszentrum oder intelligente Sensorik und Aktuatorik einsetzbar.

## Patentansprüche

1. Verfahren zur Bestimmung einer Variante einer Steuerung bzw. Steuerung eines Systems, insbesondere bei einem Kraftfahrzeug, wobei die Steuerung in verschiedenen Varianten durchgeführt werden kann, wobei eine Komponente (100, 111 - 113, 117 - 119) entsprechend den Varianten der Steuerung in verschiedenen Varianten betrieben werden kann, wobei die Komponente über eine Schnittstelle wenigstens ein Signal empfängt, **dadurch gekennzeichnet, dass** bei einer ersten Inbetriebnahme der Komponente (100,111 -113,117 -119) die Komponente (100, 111 - 113, 117 - 119) selbständig entsprechend des wenigsten einen Signals die Variante einmalig bestimmt, und dass eine weitere, der ersten Inbetriebnahme nachfolgende Änderung und/oder Vorgabe der Variante nur autorisiert möglich ist

2. Verfahren nach Anspruch 1, **dadurch gekennzeichnet, dass** die Komponente(100, 111 - 113, 117 - 119), insbesondere eine Steuereinheit, mit wenigstens einer weiteren Komponente (100,111-113, 117 -119) in Verbindung steht und das wenigstens eine Signal von der weiteren Komponente (100, 111 - 113, 117 - 119) über die Schnittstelle der Komponente übermittelt wird.

3. Verfahren nach Anspruch 1, **dadurch gekennzeichnet, dass** wenigstens eine die Variante und/oder das Signal repräsentierende Größe in einen Speicher der Komponente eingeschrieben wird und die Komponente (100, 111 - 113, 117 - 119) anhand der Größe die Variante bestimmt.

4. Verfahren nach Anspruch 1, **dadurch gekennzeichnet, dass** überprüft wird, insbesondere durch die Komponente selbst, ob eine die Variante und /oder das Signal repräsentierende Größe in einem Speicher der Komponente (100, 111-113, 117 -119) eingeschrieben ist, wobei diese Größe dann nunmehr autorisiert gelöscht und/oder geändert werden kann.

5. Vorrichtung zur Bestimmung einer Variante einer Steuerung bzw. zur Steuerung eines Systems, insbesondere bei einem Kraftfahrzeug, wobei die Steuerung in verschiedenen Varianten durchgeführt werden kann, wobei die Vorrichtung für eine Komponente (100, 111 - 113, 117 - 119) zur Steuerung entsprechend den verschiedenen Varianten der Steuerung deren Variante bestimmt **dadurch gekennzeichnet, dass** in der ersten Komponente Mittel enthalten sind welche bei einer ersten Inbetriebnahme der ersten Komponente (100, 111 - 113, 117 - 119) selbstständig einmalig abhängig von dem Signal eine Variante zur Steuerung für die erste Komponente (100, 111 - 113, 117 - 119) bestimmt, und dass die Mittel eine weitere, der ersten Inbetriebnahme nachfolgende Änderung und/oder Vorgabe der Variante zur Steuerung der ersten Komponente nur autorisiert zulassen.

6. Komponente (100, 111 - 113, 117 - 119), insbesondere Steuereinheit, zur Steuerung eines Systems, insbesondere bei einem Kraftfahrzeug, wobei die Steuerung in verschiedenen Varianten durchgeführt werden kann, wobei die Komponente entsprechend der verschiedenen Varianten der Steuerung in verschiedenen Varianten ausgeführt sein kann, wobei die Komponente über eine Schnittstelle wenigstens ein Signal empfängt, **dadurch gekennzeichnet, dass** die Komponente bei einer ersten Inbetriebnahme abhängig von dem Signal selbst einmalig eine Variante bestimmt und/oder ermittelt und dass die Komponente (100, 111 - 113, 117 - 119) eine weitere, der ersten Inbetriebnahme nachfolgende Änderung und/oder Vorgabe der Variante nur autorisiert zulässt.

## Claims

1. Method for determining a variant of control of or for controlling a system, particularly in a motor vehicle, where the control can be effected in different variants, where a component (100, 111-113, 117-119) can be operated in different variants in line with the variants of the control, where the component receives at least one signal via an interface, **characterized in that** when the component (100, 111-113, 117-119) is first started up, the component (100, 111-113, 117-119) automatically determines the variant once and only once in line with the at least one signal, and **in that** a further change to and/or selection of the variant subsequent to the first start-up is possible only with authorization.

2. Method according to Claim 1, **characterized in that** the component (100, 111-113, 117-119), particularly a control unit, is connected to at least one further component (100, 111-113, 117-119) and the at least one signal is transmitted from the further component (100, 111-113, 117-119) via the component's interface.

3. Method according to Claim 1, **characterized in that** at least one variable representing the variant and/or the signal is written to a memory in the component, and the component (100, 111-113, 117-119) uses the variable to determine the variant.

4. Method according to Claim 1, **characterized in that** a check is performed, particularly by the component itself, to determine whether a variable representing the variant and/or the signal has been written to a memory in the component (100, 111-113, 117-119), this variable then being able to be erased and/or changed with authorization.

5. Apparatus for determining a variant of control of or for controlling a system, particularly in a motor vehicle, where the control can be effected in different variants, where the apparatus determines the variant for a component (100, 111-113, 117-119) for control in line with the different variants of the control, **characterized in that** the first component contains means which, when the first component (100, 111-113, 117-119) is first started up, automatically determine a variant for control for the first component (100, 111-113, 117-119) once and only once on the basis of the signal, and **in that** the means permit a further change to and/or selection of the variant for control of the first component subsequent to the first start-up only with authorization.

6. Component (100, 111-113, 117-119), particularly a control unit, for controlling a system, particularly in a motor vehicle, where the control can be effected in different variants, where the component may be produced in different variants in line with the different variants of the control, where the component receives at least one signal via an interface, **characterized in that** when it is first started up, the component determines and/or ascertains a variant once and only once on the basis of the signal itself, and **in that** the component (100, 111-113, 117-119) permits a further change to and/or selection of the variant subsequent to the first start-up only with authorization.

## Revendications

1. Procédé pour déterminer une variante d'une commande ou une commande d'un système notamment d'un véhicule automobile selon lequel la commande peut être exécutée sous différentes variantes, et
on peut faire fonctionner un composant (100, 111-113, 117-119) selon les variantes de la commande dans différentes variantes,
le composant recevant au moins un signal par une interface,
**caractérisé en ce que**
lors de la première mise en fonctionnement des composants (100, 111-113, 117-119), les composants (100, 111-113, 117-119) déterminent une seule fois automatiquement la variante en fonction d'un signal et une autre variante à la suite de la première mise en fonctionnement et/ou prédéfinition de variante n'est possible que de façon autorisée.

2. Procédé selon la revendication 1,
**caractérisé en ce que**
les composants (100,111-113,117-119) sont notamment une unité de commande est en liaison avec au moins un autre composant (100, 111-113, 117-119) et **en ce qu'**au moins un signal de l'autre composant (100, 111-113, 117-119) est transmis par l'interface des composants.

3. Procédé selon la revendication 1,
**caractérisé en ce qu'**
au moins une grandeur représentant la variante et/ou le signal est enregistrée dans une mémoire des composants et le composant (100, 111-113, 117-119) est déterminé à l'aide de la grandeur de la variante.

4. Procédé selon la revendication 1,
**caractérisé en ce qu'**
on vérifie notamment par le composant lui-même si une grandeur représentant la variante et/ou le signal est inscrite dans une mémoire des composants (100, 111-113, 117-119), cette grandeur pouvant ensuite être effacée de manière autorisée et/ou modifiée.

5. Dispositif pour déterminer une variante d'une commande ou pour commander un système, notamment dans le cas d'un véhicule automobile selon lequel la commande peut se faire selon différentes variantes, le dispositif comportant un composant (100, 111-113, 117-119) pour commander la commande selon les différentes variantes dont on définit la variante,
**caractérisé en ce que** le premier composant contient des moyens qui, lors de la première mise en service des premiers composants (100, 111-113, 117-119) détermine automatiquement, une seule fois, en fonction du signal, une variante pour commander le premier composant (100, 111-113, 117-119), et les moyens permettent une autre modification à la suite de la variante de la première mise en service et/ou une prédéfinition de variante de commande du premier composant seulement de manière autorisée.

6. Composant (100, 111-113, 117-119) notamment unité de commande pour commander un système, notamment dans un véhicule automobile, selon lequel la commande peut se faire dans différentes variantes,
les composants étant réalisés dans différentes variantes selon les différentes variantes de la commande, le composant recevant au moins un signal par une interface,
**caractérisé en ce que**
pour la première mise en service, le composant définit une seule fois une variante directement en fonction du signal et/ou transmet cette variante et le composant (100, 111-113, 117-119) autorise une autre variante à la suite de la première mise en service et/ou la prédéfinition de la variante seulement de manière autorisée.
